# EUROPEAN PATENT APPLICATION

(11) **EP 2 514 965 A2**
(43) Date of publication of application: **24.10.2012**
(21) Application number: 12158060.9
(22) Date of filing: 05.03.2012
(51) Int. Cl.: F03D 7/02, F03D 11/00

(54) **Wind power generating system**

(30) Priority: 21.04.2011 JP 2011094854
(71) Applicant: Kabushiki Kaisha Toshiba, Minato-ku Tokyo (JP)
(72) Inventor: Matsuda, Hisashi, Tokyo (JP); Tanaka, Motofumi, Tokyo (JP); Yasui, Hiroyuki, Tokyo (JP); Goshima, Shohei, Tokyo (JP); Wada, Kunihiko, Tokyo (JP); Ozaki, Tamon, Tokyo (JP); Osako, Toshiki, Tokyo (JP)
(74) Representative: Carlsson, Eva

(57) **Abstract**

According to the present invention, there is provided a wind power generating system, having a plurality of plasma airflow generating units, each including a first electrode and a second electrode arranged being separated from the first electrode with a dielectric film and generating plasma airflow owing to dielectric barrier discharge when voltage is applied between the first electrode and the second electrode; and at least one plasma power source which supplies voltage to the plasma airflow generating units, wherein the plasma airflow generating units are arranged at a blade of the wind power generating system and are supplied with voltage as being separated into a plurality of lines separately for each of the lines.

## Description

### CROSS REFERENCE TO RELATED APPLICATION

This application is based upon and claims benefit of priority under 35 USC 119 from the Japanese Patent Application No. 2011-094854, filed on April 21, 2011, the entire contents of which are incorporated herein by reference.

### BACKGROUND OF THE INVENTION

### FIELD OF THE INVENTION

The present invention relates to a wind power generating system, and in particular, relates to a wind power generating system including plasma airflow generating units which generate airflow with dielectric barrier discharge.

### RELATED ART

From a viewpoint of preventing global warming, a power generating system with renewable energy has been globally introduced. Wind power generation is one of spreading power generation methods. However, power generation quantity of wind power generation is influenced by wind speed fluctuation and wind direction fluctuation. Accordingly, in an area with mountain climate such as Japan where wind speed and wind direction fluctuate quickly, it is difficult to maintain power generation output stably and this characteristic being drag on introducing a wind power generating system widely. Therefore, it has been strongly desired to develop a stable and highly efficient wind power generating system.

Against this background, Japanese Patent Laid-open No. 2008-25434 discloses a wind power generating system which is capable of performing control in accordance with wind fluctuation by arranging a unit to generate plasma airflow with dielectric barrier discharge at a wind turbine blade surface.

Further, as described later, Non-Patent Document 1 discloses that separation flow can be suppressed more effectively by generating plasma airflow in synchronization with a discharge cycle of separation vortexes. Patent Document 1: Japanese Patent Laid-Open No. 2008-025434 Non-Patent Document 1: "the Japanese Society of Mechanical Engineers, collection of papers (Volume B), 74-744 (2008-8), Paper No. 08-7006"

### SUMMARY OF THE INVENTION

In a case that wind turbine rotation speed is slow against main flow speed or that wind direction is varied quickly, flow separation occurs in airflow around a wind turbine blade in a wide area of the wind turbine blade as a result of large deviation of a velocity triangle around the wind turbine blade from a rated point. With a wind power generating system in the related art, there has been a problem that a wind power generating system having high efficiency cannot be realized owing to unstable power generation as being incapable of performing pitch control and yaw control against such rapid wind fluctuation.

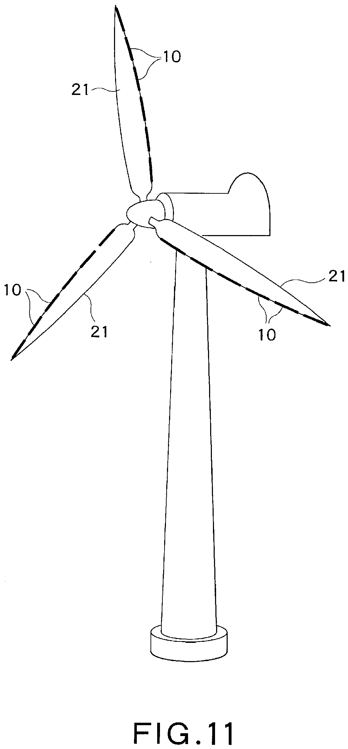

The wind power generating system disclosed in the above Patent Document 1 (Japanese Patent Laid-open No. 2008-25434) having plasma airflow generating units with dielectric barrier discharge is provided with a plurality of plasma airflow generating units 10 arranged along a leading edge of a blade 21 as schematically illustrated in FIG. 11.

With the wind power generating system having such plasma airflow generating units 10, it is proved through wind tunnel testing that wind turbine rotation speed is drastically increased in an ON-state of the plasma airflow generating units compared to that in an OFF-state thereof. The above phenomenon is considered as follows. That is, high-speed plasma airflow is generated at the vicinity of a boundary layer of air flowing on a blade surface by the plasma airflow generating units arranged at the leading edge of the wind turbine blade and separation flow around the blade is suppressed owing to variation of velocity distribution at the boundary layer. Then, the rotation speed of the wind turbine is increased with increase of lift of the wind turbine blade. The rotation speed is rapidly increased having the above as positive feedback.

In general, rated wind speed of a wind power generating system is to be in a range between 12 m/s and 13 m/s. However, there are not so many wind turbine installation locations being blessed with such rated wind speed. In most installation locations, wind in a lower speed range (between 4 m/s and 8 m/s) blows throughout the year. Accordingly, if power generation at low and middle wind speed ranges can be increased by installing the plasma airflow generating units, it becomes possible to actualize a wind power generating system stably having high efficiency throughout the year.

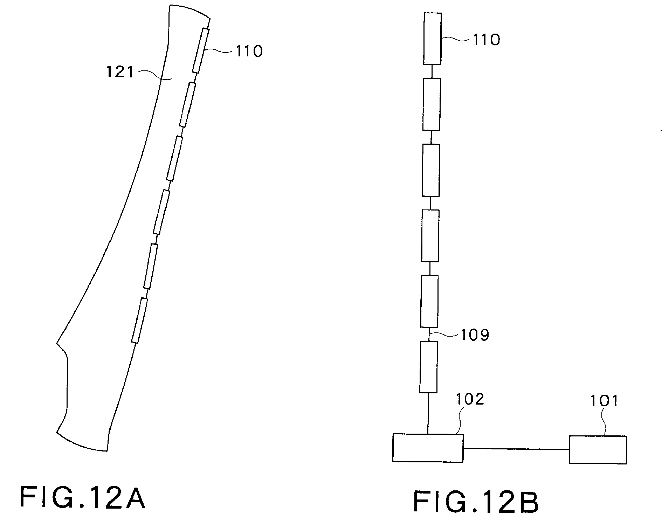

Incidentally, since a wind turbine blade under operation is to be largely deformed by wind force, the plasma airflow generating units are required to be installed to be capable of coping with blade deformation. FIG. 12 illustrates an example that a plurality of plasma airflow generating units 110 is arranged at a leading edge of a blade 121. In the related art, the plurality of plasma airflow generating units 110 being simply connected in series via connecting wires 109 is connected to a plasma power source 102 which is connected to a low voltage side power source 101. Thus, due consideration has not been given to a case of failure occurrence such as short-circuit at the plasma airflow generating unit.

To address the above issues, the present invention provides a wind power generating system stably having high efficiency as preventing the entire system from being influenced even in a case that failure such as short-circuit occurs at the plasma airflow generating unit.

According to the present invention, there is a provided a wind power generating system, comprising,
a plurality of plasma airflow generating units, each including a first electrode and a second electrode arranged being separated from the first electrode with a dielectric film and generating plasma airflow owing to dielectric barrier discharge when voltage is applied between the first electrode and the second electrode; and
at least one plasma power source which supplies voltage to the plasma airflow generating units,
wherein the plasma airflow generating units are arranged at a blade of the wind power generating system and are supplied with voltage as being separated into a plurality of lines separately for each of the lines.

Further, according to the present invention, there is a provided a wind power generating system, comprising:
a plurality of plasma airflow generating units which are arranged at a blade of the wind power generating system, each unit including a first electrode and a second electrode arranged being separated from the first electrode with a dielectric film and generating plasma airflow owing to dielectric barrier discharge when voltage is applied between the first electrode and the second electrode;
a plasma power source which supplies voltage to the plasma airflow generating units;
a shutoff device which is connected to the plasma airflow generating units and the plasma power source; and
a control unit which controls the shutoff device between a continued state and a shutoff state;
wherein the plasma airflow generating units receive voltage from the plasma power source via the shutoff device, and the control unit stops voltage supplying to a failed plasma airflow generating unit by shutting off the shutoff device when failure occurs at any of the plasma airflow generating units.

According to the wind power generating system of the present invention, it is possible to actualize a wind power generating system stably having high efficiency as preventing the entire system from being influenced even in a case that failure occurs at a part of plasma airflow generating units by including a plurality of power supply lines to the plasma airflow generating units.

### BRIEF DESCRIPTION OF THE DRAWINGS

FIGS. 1A and 1B are explanatory views illustrating an arrangement structure of plasma airflow generating units and a connection structure to supply power to the plasma airflow generating units in a wind power generating system according to the first embodiment of the present invention;
FIGS. 2A and 2B are a perspective view and a vertical sectional view illustrating a structure of the plasma airflow generating unit;
FIG. 3 is a sectional view illustrating a position of a blade to which the plasma airflow generating units are attached;
FIGS. 4A and 4B are explanatory view illustrating an arrangement structure of plasma airflow generating units and a connection structure to supply power to the plasma airflow generating units in a wind power generating system according to the second embodiment of the present invention;
FIG. 5 is an explanatory view illustrating an arrangement structure of plasma airflow generating units and a connection structure to supply power to the plasma airflow generating units in a wind power generating system according to the third embodiment of the present invention;
FIGS. 6A and 6B are explanatory view illustrating an arrangement structure of plasma airflow generating units and a connection structure to supply power to the plasma airflow generating units in a wind power generating system according to the fourth embodiment of the present invention;
FIGS. 7A and 7B are explanatory view illustrating an arrangement structure of plasma airflow generating units and a connection structure to supply power to the plasma airflow generating units in a wind power generating system according to the fifth embodiment of the present invention;
FIGS. 8A and 8B are explanatory view illustrating an arrangement structure of plasma airflow generating units and a connection structure to supply power to the plasma airflow generating units in a wind power generating system according to the sixth embodiment of the present invention;
FIGS. 9A and 9B are explanatory view illustrating an arrangement structure of plasma airflow generating units and a connection structure to supply power to the plasma airflow generating units in a wind power generating system according to the seventh embodiment of the present invention;
FIGS. 10A and 10B are explanatory view illustrating an arrangement structure of plasma airflow generating units and a connection structure to supply power to the plasma airflow generating units in a wind power generating system according to the eighth embodiment of the present invention;
FIG. 11 is a perspective view illustrating a schematic structure of an entire wind power generating system with plasma airflow generating units; and
FIGS. 12A and 12B are explanatory view illustrating an arrangement structure of plasma airflow generating units and a connection structure to supply power to the plasma airflow generating units in a conventional wind power generating system.

### DETAILED DESCRIPTION OF THE EMBODIMENTS

Hereafter, a wind power generating system according to embodiments of the present invention will be described with reference to the drawings.

### (First Embodiment)

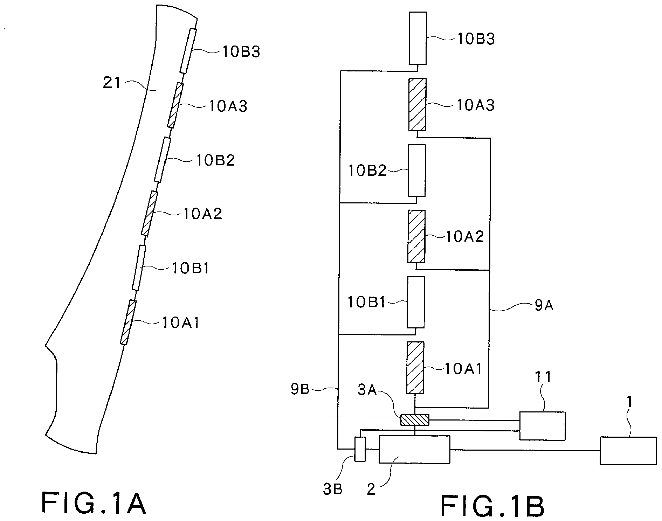

Regarding a wind power generating system according to the first embodiment of the present invention, FIG. 1A illustrates a structure having a plurality of plasma airflow generating units arranged at a blade 21, and further, FIG. 1B illustrates a connection structure to supply power to the plasma airflow generating units.

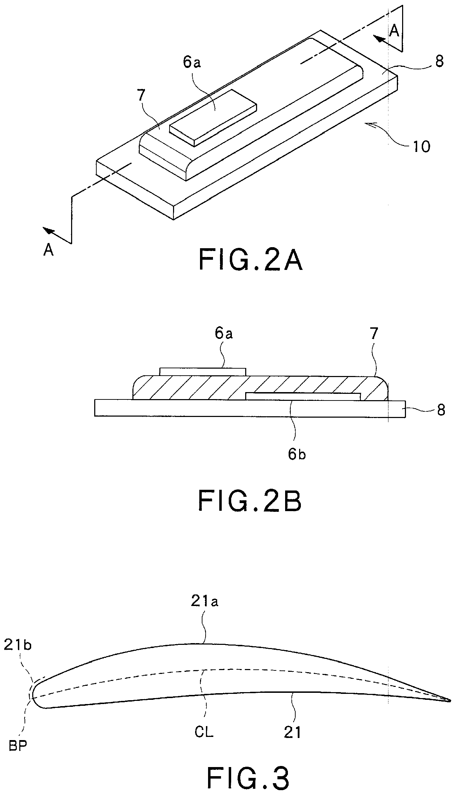

As illustrated in FIG. 1A, the plurality of unitized plasma airflow generating units 10 is arranged along a leading edge of the blade 21 of a wind turbine. As illustrated in FIG. 2A which is a perspective view illustrating outer appearance and FIG. 2B which is a vertical sectional view along line A-A in FIG. 2A, a resin 8 having high resistance to climate and high resistance to deformation is arranged as a base material of the plasma airflow generating units and a conductive inner electrode 6b is arranged on a surface of the resin 8. It is unitized by forming a conductive film 7 on the surface of the resin 8 to cover the inner electrode 6b and forming a conductive surface electrode 6a on a surface of the conductive film 7.

Since unitization is performed by utilizing the resin 8 having high resistance to climate and deformation as described above, the plasma airflow generating unit 10 can be operated as an actuator for fluid control having high reliability with long service life even in an outdoor environment where the wind turbine is installed and having superior airflow controllability.

The plasma airflow generating unit 10 may be embedded when the blade 21 is molded or may be fixed to a surface of the blade 21 with adhesion, screwing and the like. Here, it is required that the plasma airflow generating unit 10 is attached to a section of the surface of the blade 21 as being capable of suppressing separation flow. Specifically, as illustrated in FIG. 3, one end face in the longitudinal direction of the surface electrode 6a of the plasma airflow generating unit 10 is preferably to be in a predetermined range 21b (indicated by dotted line in FIG. 3) of the leading edge of the blade 21 at a suction side 21a from a leading edge base point BP of the blade 21 defined by a camber line CL. However, not limited to the range 21b, it is possible to attach the plasma airflow generating unit 10 at an arbitrary position being preferable aerodynamically and preferable for suppressing separation flow.

The surface electrode 6a and the inner electrode 6b are connected respectively to a later-mentioned plasma power source with a connecting wire (not illustrated). Plasma voltage is applied between the surface electrode 6a and the inner electrode 6b and dielectric barrier discharge is induced at the vicinity of the surface electrode 6a. Then, high speed plasma airflow is generated at the vicinity of a boundary layer of air flowing on the surface of the blade 21 while electrons and ions are generated and moved by an electric field. Accordingly, velocity distribution at the boundary layer is varied and air separation can be suppressed. Here, magnitude and direction of the airflow can be controlled by varying plasma voltage, frequency, current waveform, a duty ratio and the like.

As illustrated in FIG. 1A, a plurality of plasma airflow generating units 10A1, 10A2, 10A3 of a first line and a plurality of plasma airflow generating units 10B1, 10B2, 10B3 of a second line, each line being powered by a different power source, are alternately arranged along the leading edge of the blade 21. Here, the number of the plasma airflow generating units 10 for each line may be an arbitrary number as being one or larger. Further, it is also possible to arrange three or more of the lines as long as being arranged in plural.

A connection structure to supply power to the plasma airflow generating units 10 arranged as described above will be described with reference to FIG. 1B. For example, power source voltage of AC 100 V is supplied to a plasma power source 2 from a low voltage side voltage 1. The plasma power source 2 performs control of the dielectric barrier discharge by adjusting applying voltage and generation frequency with a built-in control mechanism. Here, the plasma power source 2 may be attached anywhere such as in a nacelle accommodating a generator and the like connected to a rotational shaft of the blade 21, in the blade 21, and the like, as long as being capable of electrically connecting to the plasma airflow generating unit 10.

The first line plasma airflow generating units 10A1, 10A2, 10A3 are connected to the plasma power source 2 in parallel with a connecting wire 9A via a shutoff device 3A. Further, the second line plasma airflow generating units 10B1, 10B2, 10B3 are connected to the plasma power source 2 in parallel with a connecting wire 9B via a shutoff device 3B. Here, not limited to being connected in parallel, the respective plasma airflow generating units 10 may be connected in series via the shutoff devices 3A, 3B.

Here, the connecting wire 9 in the present embodiment and the second to seventh embodiments to be described later is structured with two wires being a pair to supply high voltage and grounded low voltage, for example, respectively to the surface electrode 6a and the inner electrode 6b.

The shutoff devices 3A, 3B are connected respectively to a control unit 11. The control unit 11 detects failure occurrence due to isolation breakdown and the like at any of the plasma airflow generating units 10 based on information from a sensor, for example, and shuts off the shutoff device 3A or the shutoff device 3B of either line to which the plasma airflow generating unit 10 belongs. Accordingly, plasma power is not supplied to all of the plasma airflow generating units 10 of the line to which the plasma airflow generating unit 10 with failure belongs, so that operation thereof is stopped.

However, since operation of the plasma airflow generating units 10 of the other line is maintained as the plasma power being supplied thereto, separation flow around the blade 21 can be suppressed. Further, since the plasma airflow generating units 10A1, 10A2, 10A3 of the first line and the plasma airflow generating units 10B1, 10B2, 10B3 of the second line are alternately arranged along a span direction of the blade 21, suppression control of separation flow over the entire range along the span direction of the blade 21 can be performed even when failure occurs at one line.

As described above, according to the wind power generating system of the first embodiment, power is supplied to a plurality of plasma airflow generating units as being divided into a plurality of lines when suppressing separation flow around a blade by the plasma airflow generating units. Further, when failure occurs at any of the plasma airflow generating units, operation of the line is stopped and operation of lines without failure occurrence is continuously maintained. Accordingly, it is possible to actualize a wind power generating system stably having high efficiency without affecting of the failure to the entire system.

### (Second Embodiment)

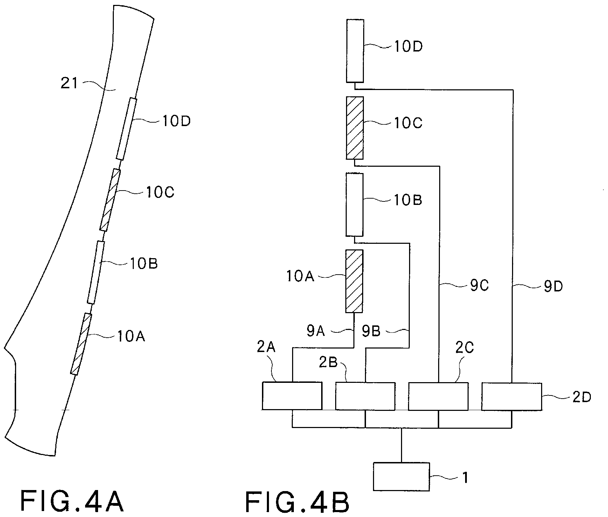

The second embodiment of the present invention will be described with reference to FIGS. 4A and 4B which illustrate arrangement and a connecting structure of plasma airflow generating units. Here, the same numeral is given to the same structural component as in the first embodiment and redundant description will not be repeated.

As illustrated in FIG. 4A, a plurality of plasma airflow generating units 10A, 10B, 10C, 10D are arranged along a leading edge direction of the blade 21. In the second embodiment, as illustrated in FIG. 4B, a plasma power source 2A, 2B, 2C, 2D is arranged for each plasma airflow generating unit 10A, 10B, 10C, 10D and is connected directly thereto via each connecting wire 9A, 9B, 9C, 9D.

Even when any of the plasma airflow generating units 10A, 10B, 10C, 10D is failed, it is possible to continuously supply power from the plasma power sources 2 connected to the rest of the plasma airflow generating units 10 owing to the structure of the plasma power sources 2A, 2B, 2C, 2D being arranged for the respective plasma airflow generating units. Accordingly, it is possible to actualize a wind power generating system stably having high efficiency as continuously performing suppression control of separation flow as preventing the entire system from being influenced by the failure.

Recently, a wind power generating system of which rotor diameter exceeds 80 meters has been introduced. In such a large-size wind power generating system, rotation speed largely differs among a tip end area, an intermediate area and a blade root area. Further, a chord length differs for each radial position and a blade circumference largely differs for each radial position.

As described above, by generating plasma airflow in synchronization with a discharge cycle of separation vortexes when the plasma airflow generating units suppresses separation flow of a blade, the separation flow can be suppressed more effectively. In the second embodiment, since each plasma power source 2A, 2B, 2C, 2D is arranged to each plasma airflow generating unit 10A, 10B, 10C, 10D which is arranged along the span direction, it is possible to separately control voltage frequency of the plasma power source. Accordingly, it is possible to perform appropriate control for separation prevention as being synchronized with a separation vortex cycle around the blade 21 being largely different along the span direction.

### (Third Embodiment)

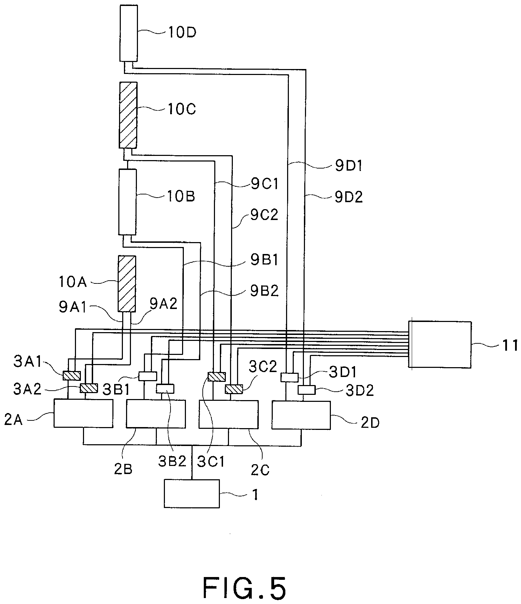

The third embodiment of the present invention will be described with reference to FIG. 5 which illustrates a connecting structure of plasma airflow generating units. Here, the same numeral is given to the same structural component as in the first and second embodiments and redundant description will not be repeated.

In the third embodiment, a plasma power source 2A, 2B, 2C, 2D is arranged for each plasma airflow generating unit 10A, 10B, 10C, 10D. Here, the arrangement of the plasma airflow generating units 10A to 10D to the blade 21 is the same as that of the second embodiment as illustrated in FIG. 4A and description thereof will not be repeated.

Two connecting wires 9A1, 9A2 are provided to connect the plasma airflow generating unit 10A and the plasma power source 2A. Similarly, two connecting wires 9B1 and 9B2, 9C1 and 9C2, 9D1 and 9D2 are provided respectively to connect the plasma airflow generating unit 10B and the plasma power source 2B, the plasma airflow generating unit 10C and the plasma power source 2C, the plasma airflow generating unit 10D and the plasma power source 2D.

Here, as described above, the connecting wires 9A1, 9A2, 9B1, 9B2, 9C1, 9C2, 9D1, 9D2 are coupled respectively as being a pair with two wires each to supply high voltage and low voltage respectively to the surface electrode 6a and the inner electrode 6b.

Further, shutoff devices 3A1 and 3A2, 3B1 and 3B2, 3C1 and 3C2, 3D1 and 3D2 are connected respectively to the connecting wires 9A1 and 9A2, 9B1 and 9B2, 9C1 and 9C2, 9D1 and 9D2 at a connecting base part being adjacent to each plasma power source 2A, 2B, 2C, 2D.

The shutoff devices 3A1 and 3A2, 3B1 and 3B2, 3C1 and 3C2, 3D1 and 3D2 are connected to the control unit 11. In a case that disconnection occurs at either of two connecting wires 9A1 and 9A2, 9B1 and 9B2, 9C1 and 9C2, 9D1 and 9D2 owing to deflection of the blade 21 and the like, the control unit 11 shuts off the shutoff device 3 which is connected to the disconnected connecting wire 9.

Accordingly, it is possible to continuously perform operation by supplying power to the plasma airflow generating units 10 via the remaining connecting wires 9 as shutting off connection via the disconnected connecting wire 9. As a result, operation of the plasma airflow generating unit 10 to which one connecting wire 9 which is disconnected can be continued with the other connecting wire 9. Therefore, it is possible to maintain appropriate control as being synchronized with a separation vortex cycle which varies for each radial position corresponding to airflow around the blade 21 being largely different along the span direction.

Here, in the third embodiment, description is performed on a case that two connecting wires 9 are connected to one plasma airflow generating unit 10. However, not limited to two, three of more of the connecting wires may be connected.

### (Fourth Embodiment)

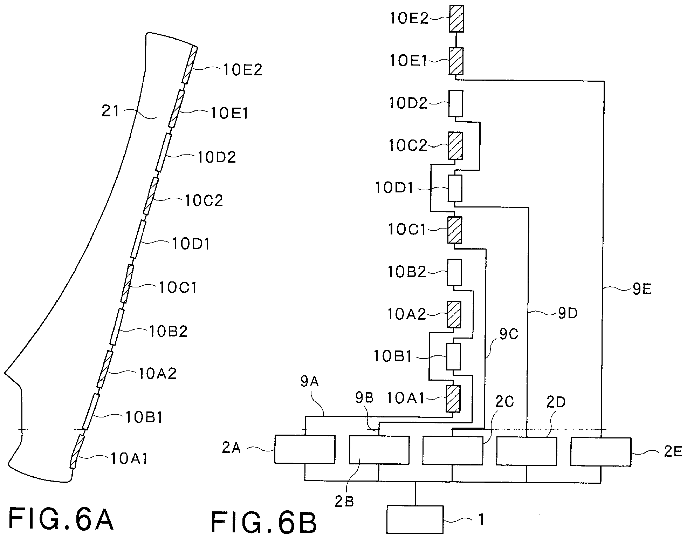

The fourth embodiment of the present invention will be described with reference to FIGS. 6A and 6B which illustrate arrangement at a blade and a connecting structure of plasma airflow generating units. Here, the same numeral is given to the same structural component as in the first to third embodiments and redundant description will not be repeated.

The fourth embodiment corresponds to a structure that the plasma power source 2 is arranged by one for each of a plurality of lines and a plurality of the plasma airflow generating units 10 are arranged for each line as combining the structure of the first embodiment that the plurality of plasma airflow generating units 10 are arranged to each line as being divided into a plurality of lines and the structure of the second embodiment that the plasma power source 2 is arranged by one for each of the plurality of lines.

Specifically, ten of the plasma airflow generating units 10 are divided into five lines and the plasma airflow generating units 10 are arranged by two for each of the lines, and then, the plasma power source 2 is arranged to each line. The plasma power source 2A is connected to the plasma airflow generating units 10A1, 10A2 via the connecting wire 9A. The plasma power source 2B is connected to the plasma airflow generating units 10B1, 10B2 via the connecting wire 9B. The plasma power source 2C is connected to the plasma airflow generating units 10C1, 10C2 via the connecting wire 9C. The plasma power source 2D is connected to the plasma airflow generating units 10D1, 10D2 via the connecting wire 9D. The plasma power source 2E is connected to the plasma airflow generating units 10E1, 10E2 via the connecting wire 9E. A plasma airflow generating unit 10 of another line is arranged between two plasma airflow generating units 10 of a single line such that the plasma airflow generating unit 10B1 of another line is arranged between the plasma airflow generating unit 10A1 and the plasma airflow generating unit 10A2. Here, not being required that all of the plasma air generating units 10 are placed as being spaced as described above, it is also possible to include continuous placing as the plasma airflow generating units 10E1, 10E2.

For example, in a case that the plasma airflow generating unit 10A1 of a certain line is failed, power supply operation from the plasma power source 2A connected thereto is stopped and operation of the plasma airflow generating units 10A1, 10A2 are stopped. Meanwhile, power supply to other plasma airflow generating units, 10B1, 10B2, 10C1, 10C2, 10D1, 10D2, 10E1, 10E2 is continued and operational states thereof are maintained.

In this manner, even in a case that failure occurs at a plasma airflow generating unit 10 in any of the lines, operational states of the plasma airflow generating units 10 of other lines can be maintained by arranging the plasma power source 2 for each line. Further, since the plasma airflow generating unit 10 of a different line is inserted between the plural plasma airflow generating units 10 of the same line, appropriate control corresponding to separation flow varying for each radial position of the blade 21 can be maintained even when the plasma airflow generating unit 10 in any of lines becomes in a non-operable state.

Further, since a plurality of plasma airflow generating units 10 is placed to one plasma power source 2 which is arranged to one line, it is possible to perform separation flow control over a wide range of the blade 21 while achieving cost reduction as suppressing the number of the plasma power sources 2.

### (Fifth Embodiment)

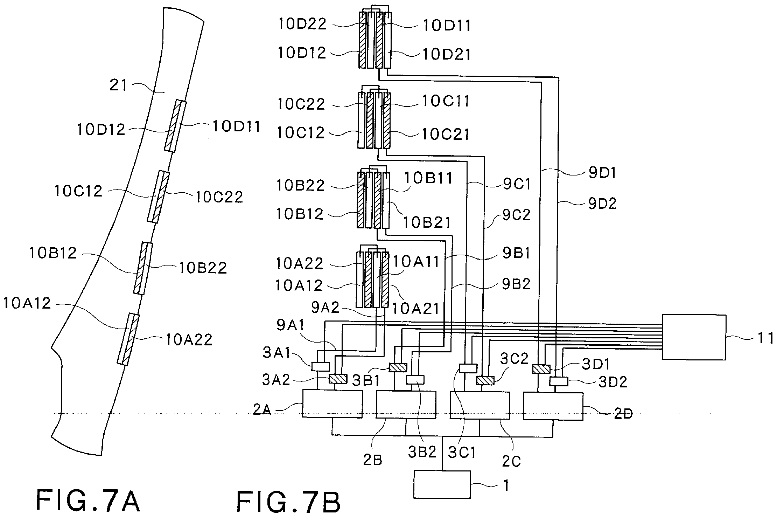

The fifth embodiment of the present invention will be described with reference to FIGS. 7A and 7B which illustrate arrangement at a blade and a connecting structure of plasma airflow generating units. Here, the same numeral is given to the same structural component as in the first to fourth embodiments and redundant description will not be repeated.

Recently, a large-size wind turbine has been utilized for a wind power generating system and a rotor having diameter exceeding 80 meters has been introduced. Here, a chord length reaches to two to four meters depending on a radial position of a blade.

To control flow around such a large blade, it is effective to generate stronger plasma airflow by arranging plasma airflow generating units along a blade chord direction in a tandem manner.

In the fifth embodiment being particularly effective for such a large-size wind turbine, plasma airflow generating units form a block for each radial position as being plurally arranged in a tandem manner and a plasma power source is arranged for each block.

Specifically, as illustrated in FIGS. 7A and 7B, plasma airflow generating units 10A12, 10A22, 10A11, 10A21 form a single block as being arranged along the airflow generation direction in a tandem manner. In FIG. 7A, the plasma airflow generating units 10A12, 10A22 are illustrated among four of the plasma airflow generating units 10 which are arranged along the leading edge of the blade 21. The plasma airflow generating units 10A11, 10A21 are arranged behind the plasma airflow generating unit 10A22. Similarly, four plasma airflow generating units 10B12, 10B22, 10B11, 10B21, four plasma airflow generating units 10C12, 10C22, 10C11, 10C21, and four plasma airflow generating units 10D12, 10D22, 10D11, 10D21 are arranged as respectively structuring a block along the airflow generation direction in a tandem manner.

As illustrated in FIG. 7B, a plasma power source 2A, 2B, 2C, 2D are arranged by one for each block which is formed of the four plasma airflow generating units 10 arranged in a tandem manner.

The plasma airflow generating units 10A11, 10A21 are connected to the plasma power source 2A in parallel respectively via a shutoff device 3A1, 3A2 with a connecting wire 9A1, 9A2. The plasma airflow generating unit 10A12 is connected to the plasma airflow generating unit 10A11 in series and the plasma airflow generating unit 10A22 is connected to the plasma airflow generating unit 10A21 in series.

Similarly, the plasma airflow generating units 10B11, 10B21 are connected to the plasma power source 2B in parallel respectively via a shutoff device 3B1, 3B2 with a connecting wire 9B1, 9B2. The plasma airflow generating unit 10B12 is connected to the plasma airflow generating unit 10B11 in series and the plasma airflow generating unit 10B22 is connected to the plasma airflow generating unit 10B21 in series.

The plasma airflow generating units 10C11, 10C21 are connected to the plasma power source 2C in parallel respectively via a shutoff device 3C1, 3C2 with a connecting wire 9C1, 9C2. The plasma airflow generating unit 10C12 is connected to the plasma airflow generating unit 10C11 in series and the plasma airflow generating unit 10C22 is connected to the plasma airflow generating unit 10C21 in series.

The plasma airflow generating units 10D11, 10D21 are connected to the plasma power source 2D in parallel respectively via a shutoff device 3D1, 3D2 with a connecting wire 9D1, 9D2. The plasma airflow generating unit 10D12 is connected to the plasma airflow generating unit 10D11 in series and the plasma airflow generating unit 10D22 is connected to the plasma airflow generating unit 10D21 in series.

Then, the shutoff devices 3A1, 3A2, 3B1, 3B1, 3C1, 3C2, 3D1, 3D2 are connected respectively to the control unit 11.

As described above, in the fifth embodiment, the plasma power sources 2A, 2B, 2C, 2D are arranged separately for each radial position of the blade 21 while four plasma airflow generating units 10 are arranged as one block along the airflow generation direction in a tandem manner. Accordingly, appropriate control in synchronization with respective separation vortex cycles can be performed in accordance with airflow around the blade 21 being largely varied depending on radial positions of a large-size wind turbine.

Further, among the four plasma airflow generating units 10 which are arranged in a tandem manner, for example, the shutoff device 3A1 is connected to the plasma airflow generating units 10A11, 10A12 and the shutoff device 3A2 is connected to the plasma airflow generating units 10A21, 10A22 which are connected respectively in series. For example, in a case that failure occurs at the plasma airflow generating unit 10A11, the control unit 11 shuts off the shutoff device 3A1 to stop power supply to the plasma airflow generating units 10A11, 10A12 which are connected thereto in series. However, power can be supplied to the rest of the plasma airflow generating units 10 to be capable of continuously maintaining operational states thereof.

Further, since the plasma airflow generating unit 10 connected to a different shutoff device 3 is arranged between the plasma airflow generating units 10 serially-connected to a single shutoff device 3, influence to airflow generation can be suppressed even when shutoff occurs at any of the shutoff devices 3. Accordingly, it is possible to actualize a wind power generating system stably having high efficiency while sufficiently maintaining separation flow control as the entire blade 21.

### (Sixth Embodiment)

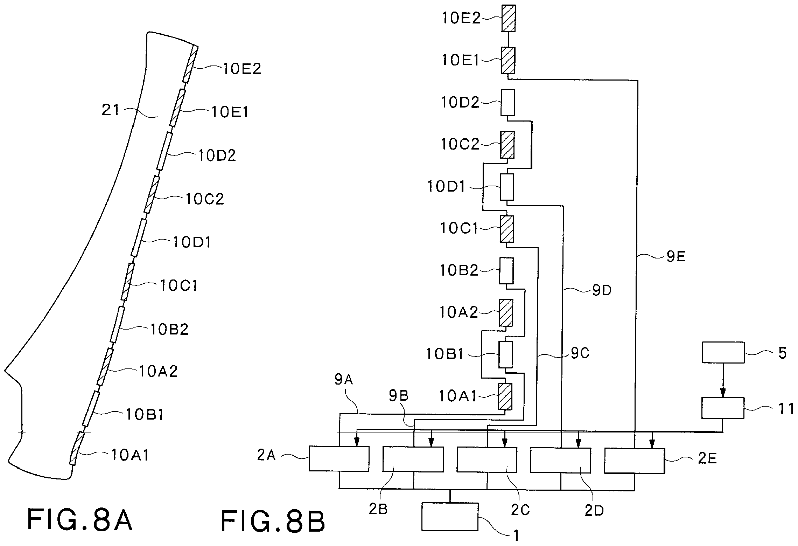

The sixth embodiment of the present invention will be described with reference to FIGS. 8A and 8B which illustrate arrangement at a blade of a plasma airflow generating unit and a connecting structure of the plasma airflow generating unit. Here, the same numeral is given to the same structural component as in the first to fifth embodiments and redundant description will not be repeated.

The sixth embodiment corresponds to the plasma airflow generating unit of the fourth embodiment to which a structure that the control unit 11 performs feedback control on operations of the plasma power sources 2A to 2E based on information obtained by monitoring an operational state of the blade 21 is added. The arrangement of the plasma airflow generating units 10 at the blade 21 and the connecting structure between the plasma airflow generating unit 10 and the plasma power source 2 are the same as those in the fourth embodiment and description thereof will not be repeated.

In a case of controlling separation flow of the blade 21 with the plasma airflow generating units 10, the separation phenomenon can be further suppressed by generating plasma airflow in synchronization with a separation vortex discharge cycle as described above. However, whirl speeds and blade chord lengths are varied in accordance with radial positions of the blade 21, and further, wind speeds and wind directions are varied in accordance with height positions of the system. Therefore, the frequency of the separation vortexes is to be different in accordance with a position.

Then, in the sixth embodiment, feedback is performed separately on each plasma power source 2A, 2B, 2C, 2D, 2E as calculating frequency control conditions to increase wind turbine rotation speed with monitoring of the wind turbine rotation speed by utilizing a rotation speed sensor 5, for example. Accordingly, it becomes possible to suppress separation flow in accordance with radial positions. Here, it is preferable that the frequency control conditions are separately provided to each plasma power source 2A, 2B, 2C, 2D, 2E for performing control in accordance with radial positions. However, even when the same frequency conditions are applied to the plasma power sources 2A, 2B, 2C, 2D, 2E collectively as the entire blade 21, control to suppress separation can be performed.

Further, it is also possible to set frequency conditions of voltage occurring at the plasma power sources 2A, 2B, 2C, 2D based on information obtained from various sensors which are generally provided to a wind power generating system, such as a wind speed sensor which measures speed of airflow to the blade 21, a wind direction sensor which measures wind direction of airflow to the blade 21, and a pressure sensor which measures pressure at a surface of the blade 21.

For setting the frequency conditions, for example, a first frequency condition set at the control unit 11 is applied to the plasma power source 2 and the plasma airflow generating unit 10 is operated for a predetermined time as applying power under the first frequency condition, and then, the wind turbine rotation speed at that time is measured. Then, the plasma airflow generating unit 10 is operated under a second frequency condition being different therefrom for a predetermined time and the wind turbine rotation speed at that time is measured. The wind turbine rotation speed under the first frequency condition and the wind turbine rotation speed under the second frequency condition are compared and preferable one is to be selected. Appropriate conditions are to be searched by repeating the above processes.

Naturally, the feedback control has a time constant until response occurs against fluctuation of wind speed and wind direction. However, with averaging having a predetermined time as a unit time, it is effective for performing separation suppressing to perform searching for the appropriate conditions of blade to the feedback control.

According to the sixth embodiment, separation flow around a blade is suppressed based on information as monitoring wind turbine rotation speed, for example, and operations of other plasma airflow generating units are continued even in a case that failure occurs at a certain plasma airflow generating unit similarly to the fourth embodiment. Accordingly, it is possible to actualize a wind power generating system stably having high efficiency.

### (Seventh Embodiment)

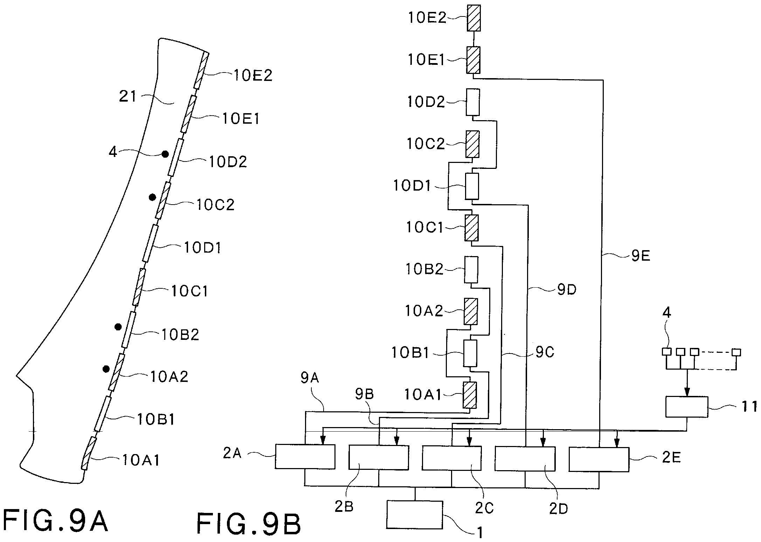

The seventh embodiment of the present invention will be described with reference to FIGS. 9A and 9B which illustrate a connecting structure of plasma airflow generating units. Here, the same numeral is given to the same structural component as in the first to sixth embodiments and redundant description will not be repeated.

In addition to the structure of the sixth embodiment, in the seventh embodiment, a physical sensor 4 is arranged on the surface of the blade 21 and detects information of airflow around the blade 21 to provide the information to the control unit 11. Then, power voltage frequencies of the plasma power sources 2A, 2B, 2C, 2D, 2E are controlled based on the information. Owing to such a feedback loop, the seventh embodiment generates plasma airflow which suppresses separation more effectively than the sixth embodiment. Here, the arrangement of the plasma airflow generating units 10A1, 10A2, 10B1, 10B2, 10C1, 10C2, 10D1, 10D2, 10E1, 10E2 at the surface of the blade 21 and the connecting structure among the plasma airflow generating units 10 and the plasma power sources 2A, 2B, 2C, 2D, 2E are the same as those in the sixth embodiment and description thereof will not be repeated.

For example, a pressure sensor, a flow speed sensor which measures flow speed at the surface of the blade 21, and the like may be adopted as the physical sensor 4. When flow sticking to the surface of the blade 21 is separated, surface pressure is increased. In a case of utilizing a pressure sensor, the pressure variation is detected. When the separation phenomenon occurs, flow speed of the airflow at the surface of the blade 21 is varied. In a case of utilizing a flow speed sensor, the flow speed variation is detected.

In a case of a large-size wind turbine in which the tip end of the blade 21 rise to be close to 100 meters from the ground, distribution of wind speed and wind direction in the vertical direction influences flow around the blade 21. Therefore, the airflow around the blade 21 is momentarily varied in accordance with a radial position and a rotational position. Owing to monitoring of the pressure and flow speed at the surface of the blade 21 by utilizing the physical sensor 4, it becomes possible to ascertain behavior of local flow at each position around the blade 21.

Here, optimization of the plasma airflow generation frequency of the plasma airflow generating unit 10 located at a position having flow separation ranges most frequently in terms of time is promoted while ascertaining flow behavior with the physical sensor 4 arranged to the blade 21. Specifically, for example, the plasma airflow generating unit 10 is operated for a predetermined time under the first frequency condition and the control unit 11 obtains information detected by the physical sensor 4 at that time. Next, the plasma airflow generating unit 10 is operated under the second frequency condition for a predetermined time, and then, information detected by the physical sensor 4 at that time is compared with the previous information. In this manner, it is repeated to perform processes to search for either frequency condition under which the separation flow is further suppressed.

According to the seventh embodiment, since optimization of plasma airflow is promoted by supplying appropriate voltage frequency to the plasma airflow generating unit 10 based on flow behavior detected by the physical sensor 4, separation flow around the blade 21 can be effectively suppressed. Further, similarly to the sixth embodiment, even in a case that failure occurs at a certain plasma airflow generating unit 10, operation of other plasma airflow generating units 10 can be continued. Accordingly, it is possible to actualize a power generating system stably having high efficiency.

### (Eighth Embodiment)

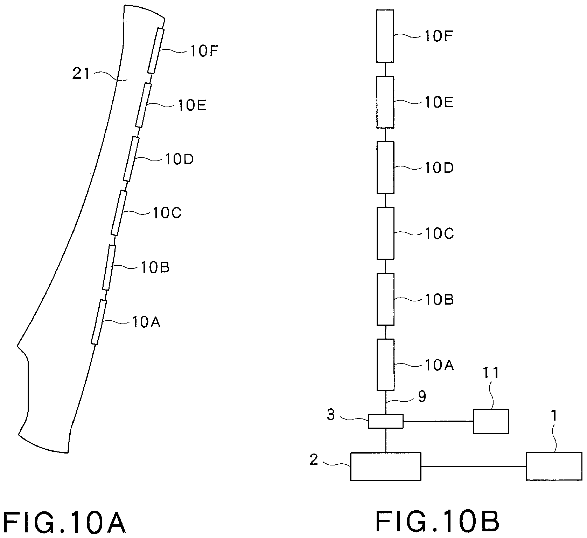

A wind power generating system according to the eighth embodiment of the present invention will be described with reference to FIGS. 10A and 10B which illustrate arrangement and a connecting structure of plasma airflow generating units. Here, the same numeral is given to the same structural component as in the first to seventh embodiments and redundant description will not be repeated.

As illustrated in FIG. 10A, the plurality of plasma airflow generating units 10A, 10B, 10C, 10D, 10E, 10F are arranged along the leading edge direction of the blade 21. As illustrated in FIG. 10B, the plasma airflow generating units 10A to 10F of one line are connected to the plasma power source 2 with the connecting wire 9 via the shutoff device 3. Here, the respective plasma airflow generating units 10A to 10F may be connected to the plasma power source 2 via the shutoff device 3 in series as illustrated in FIG. 10B or in parallel.

The shutoff device 3 is connected to the control unit 11. When failure occurs at any of the plasma airflow generating units 10A to 10F, the control unit 11 shuts off the shutoff device 3. Accordingly, plasma power is not supplied from the plasma power source 2 to all of the plasma airflow generating units 10A to 10F of a single line in which a failed plasma airflow generating device is included and operation thereof is stopped.

A wind power generating system is provided with a control system which performs control of a wind turbine body such as control of blade pitch. There is a case that such a control system of the wind turbine body is arranged as being integrated with the control unit 11 of the plasma airflow generating unit as a circuit or being adjacent thereto. In such a case, if the failed plasma airflow generating unit 10A to 10F is connected to the plasma power source 2 and the control unit 11, there may be a possibility that the control system of the wind turbine body suffers damage at the time of lightning and the like.

In contrast, according to the eighth embodiment, the plasma airflow generating units 10A to 10F are electrically shut off from the plasma power source 2 and the control unit 11 reliably by the shutoff device 3 when any of the plasma airflow generating units 10A to 10F is failed. Accordingly, damages to the control system of the wind turbine body can be prevented.

All of the above embodiments are examples and may be modified variously within the technical scope of the present invention. For example, it is possible to arbitrarily set the number and arrangement of the plasma airflow generating units, installation location of the blade, the number of lines of the plasma airflow generating units, and the like in the first to eighth embodiments as needed basis.

For example, as illustrated in FIG. 1A, the first to eighth embodiments adopt arrangement so that the longitudinal direction of the plasma airflow generating units 10 along the leading edge of the blade 21 is matched to the span direction. However, the arrangement direction of the plasma airflow generating units 10 is not limited. For example, it is also possible to adopt arrangement that the longitudinal direction of the plasma airflow generating units 10 is matched with the chord direction of the blade 21. In this manner, the arrangement direction of the plasma airflow generating units 10 is arranged to be preferable aerodynamically during rotation of a wind turbine blade and to be preferable for suppression control of separation.

## Claims

1. A wind power generating system, comprising:
a plurality of plasma airflow generating units, each including a first electrode and a second electrode arranged being separated from the first electrode with a dielectric film and generating plasma airflow owing to dielectric barrier discharge when voltage is applied between the first electrode and the second electrode; and
at least one plasma power source which supplies voltage to the plasma airflow generating units,
wherein the plasma airflow generating units are arranged at a blade of the wind power generating system and are supplied with voltage as being separated into a plurality of lines separately for each of the lines.

2. The wind power generating system according to claim 1,
wherein the plasma airflow generating units are arranged on a surface of the blade of the wind power generating system.

3. The wind power generating system according to claim 1, further comprising:
a shutoff device which is arranged for each of the lines; and
a control unit which controls the shutoff devices between a continued state and a shutoff state,
wherein the plasma airflow generating unit is connected to the plasma power source via the shutoff device for each of the lines, and
the control unit shuts off the shutoff device of the same line as a failed plasma airflow generating unit when failure occurs at any of the plasma airflow generating units and stops voltage supplying to the plasma airflow generating units belonging to the line and maintains the rest of the shutoff devices in the continued state.

4. The wind power generating system according to claim 1,
wherein the plasma power source is arranged for each of the lines,
at least one of the plasma airflow generating units is connected to the plasma power source of a single line for each of the lines, and
the plasma power source supplies voltage to the plasma airflow generating units separately for each of the lines.

5. The wind power generating system according to claim 1, further comprising:
a plurality of shutoff devices which is arranged for each of the plasma airflow generating units; and
a control unit which controls the shutoff devices between a continued state and a shutoff state,
wherein the plasma power source is arranged for each of the plasma airflow generating units,
the plasma airflow generating unit is connected to the plasma power source with connecting wires respectively via a plurality of the shutoff devices, and
the control unit shuts off the shutoff device which is connected to a failed connecting wire when disconnection occurs at any of the connecting wires and maintains the rest of the shutoff devices connected to the plasma airflow generating unit which is connected to the failed connecting wire in the continued state.

6. The wind power generating system according to claim 1,
wherein a plurality of the plasma airflow generating units are arranged as a plurality of blocks arranged in a tandem manner along a chord direction of the blade is arranged along a span direction of the blade,
the plasma power source is arranged for each of the blocks,
each of the blocks includes a plurality of sub-blocks, a plurality of the plasma airflow generating units is arranged for each of the sub-blocks, and the plasma airflow generating unit in a sub-block is arranged between the plasma airflow generating units in another single sub-block,
a shutoff device which is arranged for each of the sub-blocks and a control unit which controls the shutoff devices between a continued state and a shutoff state are further provided, and
the plasma airflow generating units in each of the sub-blocks are connected to the plasma power source via the shutoff device.

7. The wind power generating system according to claim 1, further comprising:
a physical sensor which detects information regarding at least any one of rotation speed of the blade, a pressure state at a surface of the blade, and flow speed of airflow on a surface of the blade; and
a control unit which controls operation of the plasma power source,
wherein the control unit controls operation of the plasma power source based on the information which is detected by the physical sensor.

8. The wind power generating system according to any one of claims 1 to 7,
wherein one end face in the longitudinal direction of the first electrode of the plasma airflow generating unit is arranged along a span direction of the blade in a range from a leading edge base point to a suction side of the blade defined by a camber line of the blade.

9. The wind power generating system according to any one of claims 1 to 8,
wherein the plasma airflow generating units belonging to the mutually different lines are alternately arranged along a span direction of the blade.

10. A wind power generating system, comprising:
a plurality of plasma airflow generating units which are arranged at a blade of the wind power generating system, each unit including a first electrode and a second electrode arranged being separated from the first electrode with a dielectric film and generating plasma airflow owing to dielectric barrier discharge when voltage is applied between the first electrode and the second electrode;
a plasma power source which supplies voltage to the plasma airflow generating units;
a shutoff device which is connected to the plasma airflow generating units and the plasma power source; and
a control unit which controls the shutoff device between a continued state and a shutoff state;
wherein the plasma airflow generating units receive voltage from the plasma power source via the shutoff device, and the control unit stops voltage supplying to a failed plasma airflow generating unit by shutting off the shutoff device when failure occurs at any of the plasma airflow generating units.

11. The wind power generating system according to claim 10, further comprising a physical sensor which detects information regarding at least any one of rotation speed of the blade, a pressure state at a surface of the blade, and flow speed of airflow on a surface of the blade, and a control unit which controls operation of the plasma power source,
wherein the control unit controls operation of the plasma power source based on the information which is detected by the physical sensor.

12. The wind power generating system according to claim 10 or claim 11,
wherein one end face in the longitudinal direction of the first electrode of the plasma airflow generating unit is arranged along a span direction of the blade in a range from a leading edge base point to a suction side of the blade defined by a camber line of the blade.
